# DEMANDE DE BREVET EUROPEEN

(11) **EP 3 348 179 A1**
(43) Date de publication de la demande: **18.07.2018**
(21) Numéro de dépôt: 18151751.7
(22) Date de dépôt: 15.01.2018
(51) Int. Cl.: A47J 41/00, A47J 31/50, B65D 47/00

(54) **APPAREIL DE PREPARATION ET DE DISTRIBUTION D'UN ALIMENT CHAUD VISQUEUX OU PATEUX**

(30) Priorité: 13.01.2017 FR 1750293
(71) Demandeur: FONDWICH FACTORY, 74200 Thonon-les-Bains (FR)
(72) Inventeur: ROYER, Frederic, 74200 Allinges (FR)
(74) Mandataire: e-Patent SA

(57) **Abrégé**

L'invention concerne un appareil (1; 100) de préparation et de distribution d'un aliment chaud, visqueux ou pâteux, comportant
- une cuve (4; 106) comprenant
une première ouverture (10; 110), pour l'introduction d'une préparation destinée à être transformée en aliment chaud visqueux ou pâteux,
une deuxième ouverture (22; 122), pour la distribution de l'aliment,
un dispositif de chauffage, pour chauffer la préparation jusqu'à une température de transformation prédéfinie,
- un dispositif de distribution (26) communiquant avec la deuxième ouverture (22; 122) et présentant un orifice de distribution (36; 136),
le dispositif de distribution (26) comportant une chambre de dosage (30; 130) chauffée et agencée pour recevoir une quantité prédéfinie d'aliment, et étant agencé pour distribuer la quantité prédéfinie d'aliment en réponse à une action d'un utilisateur sur un organe de commande adapté.

## Description

### Domaine technique

La présente invention concerne un appareil de préparation et de distribution d'un aliment chaud, visqueux ou pâteux, comportant
- une cuve comprenant, en position de service,
   une première ouverture, dans sa partie supérieure, agencée pour permettre l'introduction d'une préparation destinée à être transformée en aliment chaud visqueux ou pâteux,
   une deuxième ouverture, dans sa partie inférieure, destinée à permettre la distribution de l'aliment chaud visqueux ou pâteux,
   un dispositif de chauffage, destiné à chauffer la préparation à l'intérieur de la cuve jusqu'à une température de transformation prédéfinie, adaptée pour transformer la préparation en aliment chaud visqueux ou pâteux,
- un dispositif de distribution agencé en aval de la deuxième ouverture de la cuve et présentant un orifice de distribution pour distribuer l'aliment chaud visqueux ou pâteux, le dispositif de chauffage étant également agencé pour maintenir au moins une partie du dispositif de distribution à une température de distribution prédéfinie.

### Etat de la technique

De tels appareils de préparation et de distribution sont connus dans le domaine agroalimentaire.

Typiquement, des appareils de ce type sont utilisés dans la fabrication de produits chocolatés, notamment sur des chaines de fabrication. Une quantité importante d'une pâte chaude chocolatée est préparée dans une cuve, par chauffage et mélangeage d'une préparation adaptée à l'intérieur de la cuve. La pâte chocolatée s'écoule ensuite hors de la cuve, par flux continu, pour être déversée dans un récipient adapté, par exemple un moule, disposé sur une chaîne à translation continue. Dans certains cas, une vanne automatique à ouverture périodique commandée permet de réguler le volume de pâte s'écoulant d'un bec de distribution pour remplir chaque récipient.

Ces chaines de fabrication sont généralement installées dans des espaces dont l'atmosphère est contrôlée, notamment en température. Ainsi, les paramètres de fonctionnement de la chaine sont relativement simples à ajuster pour obtenir un bon dosage de la pâte s'écoulant dans chacun des récipients. De plus, ces appareils sont adaptés à une utilisation continue et se prêteraient mal à une utilisation individuelle, c'est-à-dire notamment à une distribution à la demande d'un aliment chaud visqueux ou pâteux.

La demande de brevet EP 2524603 A1 décrit un exemple d'un appareil répondant à l'ensemble des caractéristiques énoncées plus haut, comprenant notamment des moyens de chauffage agencés à proximité immédiate de son robinet de distribution.

Toutefois, cet appareil est également adapté pour distribuer un aliment de manière continue et ne permet pas d'obtenir une bonne reproductibilité de la quantité d'aliment chaud distribuée lors de distributions successives.

### Divulgation de l'invention

Un but principal de la présente invention est de proposer un appareil de préparation et de distribution du type mentionné plus haut qui permettrait de distribuer une dose prédéfinie d'un aliment chaud visqueux ou pâteux à la demande, y compris dans une atmosphère qui ne serait pas contrôlée.

A cet effet, la présente invention concerne plus particulièrement un appareil de préparation et de distribution d'un aliment visqueux ou pâteux répondant aux caractéristiques mentionnées plus haut, caractérisé
par le fait que le dispositif de distribution comporte
   - une chambre de dosage définissant un volume prédéfini d'aliment chaud visqueux ou pâteux à distribuer et agencée de manière à pouvoir communiquer, d'une part, avec la deuxième ouverture et, d'autre part, avec l'orifice de distribution, la chambre de dosage étant destinée à être vide, dans un premier état de repos du dispositif de distribution en étant isolée à la fois de la deuxième ouverture et de l'orifice de distribution,
   - un organe de commande externe agencé pour actionner un cycle de distribution, en réponse à une action prédéfinie d'un utilisateur, et
par le fait que le dispositif de distribution soit agencé de telle manière qu'il soit susceptible de présenter successivement, en réponse à l'action prédéfinie,
   - un deuxième état, de dosage, dans lequel la chambre de dosage communique avec la deuxième ouverture tout en étant isolée de l'orifice de distribution, puis
   - un troisième état, de distribution, dans lequel la chambre de dosage communique avec l'orifice de distribution tout en étant isolée de la deuxième ouverture.

Grâce à ces caractéristiques, l'appareil selon la présente invention permet une distribution à la demande de doses prédéfinies et reproductibles d'un aliment chaud visqueux ou pâteux sans que la température environnante ne perturbe l'écoulement de l'aliment entre la cuve et le récipient dans lequel il est distribué.

Par aliment chaud visqueux ou pâteux au sens de la présente invention, il convient de comprendre des fromages, des composés chocolatés, de la polenta, des purées, voire toute autre composition chaude présentant une viscosité assez élevée en référence à la viscosité de l'eau tout en étant susceptible d'être distribuée par écoulement.

En particulier, l'appareil selon la présente invention se prête particulièrement bien à la distribution de doses, individuelles ou plus importantes, de mélanges de fromages chauds, comme de la fondue au fromage. On peut ainsi prévoir de disposer un appareil selon la présente invention sur la terrasse d'un restaurant, y compris en hiver, éventuellement même d'un restaurant d'altitude comme en station d'hiver, pour proposer un service de distribution de doses individuelles de fondue au fromage que les consommateurs peuvent déposer directement sur ou dans un morceau de pain. Une telle application n'est pas envisageable avec les appareils connus de l'art antérieur.

Selon un mode de réalisation préféré, on peut prévoir que le dispositif de distribution comporte
un premier clapet, agencé entre la deuxième ouverture et la chambre de dosage, susceptible de présenter un premier état par défaut, fermé, dans lequel il isole la chambre de dosage de la cuve et un deuxième état, ouvert, dans lequel la cuve et la chambre de dosage communiquent l'une avec l'autre,
un deuxième clapet, agencé entre la chambre de dosage et l'orifice de distribution, susceptible de présenter un premier état par défaut, fermé, dans lequel il isole la chambre de dosage de l'orifice de distribution et un deuxième état, ouvert, dans lequel la chambre de dosage communique avec l'orifice de distribution, et
un organe de commande sélectif des états des premier et deuxième clapets agencé pour agir sur eux de telle manière qu'un seul d'entre eux est ouvert à la fois lors de la mise en oeuvre du cycle de distribution.

On peut alors avantageusement prévoir que le dispositif de distribution comporte une pompe destinée à être actionnée en réponse à l'action prédéfinie de l'utilisateur, d'une part, pour remplir la chambre de dosage en aliment chaud visqueux ou pâteux au travers du premier clapet et, d'autre part, pour repousser l'aliment chaud visqueux ou pâteux en direction de l'orifice de distribution, au travers du deuxième clapet.

Selon une variante de réalisation préférée de l'invention, on peut prévoir que le dispositif de distribution comporte un mécanisme de commande agencé de telle manière, qu'en réponse à l'action prédéfinie de l'utilisateur, il agisse sur la chambre de dosage pour la positionner successivement
dans une première configuration prédéfinie, dans laquelle elle présente un premier trou en regard de la deuxième ouverture de la cuve, pour permettre son remplissage, puis
dans une deuxième configuration prédéfinie, dans laquelle elle présente un deuxième trou en regard de l'orifice de distribution, pour permettre la distribution de l'aliment chaud visqueux ou pâteux au travers de l'orifice de distribution.

Dans ce cas, on peut avantageusement prévoir que le dispositif de distribution comporte un tiroir amovible dans lequel est ménagé l'orifice de distribution et définissant un logement dans lequel la chambre de dosage est susceptible d'être déplacée en translation, en réponse à l'action prédéfinie, le tiroir présentant une entrée agencée en regard de la deuxième ouverture de la cuve en position de service.

En outre, le tiroir peut avantageusement porter le mécanisme de commande, ce dernier comportant un piston agencé pour s'engager dans la chambre de dosage par son premier trou et repousser l'aliment chaud visqueux ou pâteux qu'elle contient pour l'expulser au travers du deuxième trou, en direction de l'orifice de distribution, lorsque la chambre de dosage est dans sa deuxième configuration prédéfinie.

De manière générale, on peut prévoir que la température de distribution est située dans une plage en températures sensiblement comprise entre la température de transformation et une température seuil inférieure à cette dernière d'environ 20°C.

Le dispositif de chauffage est préférablement agencé pour maintenir l'intérieur de la chambre de dosage à une température de dosage sensiblement égale à la température de distribution.

De manière générale, on peut prévoir que le dispositif de chauffage comporte
un premier élément chauffant agencé pour chauffer la préparation à l'intérieur de la cuve jusqu'à la température de transformation, et
un deuxième élément chauffant agencé pour maintenir l'intérieur de la chambre de dosage à la température de dosage.

La température de dosage peut ainsi être ajustée indépendamment de la température de transformation, ce qui permet d'optimiser la consommation énergétique de l'appareil.

Suivant une variante de réalisation préférée, on peut prévoir que l'appareil comporte un bâti, le dispositif de chauffage comportant une enceinte chauffée agencée à l'intérieur du bâti à la fois
autour de la cuve, de telle manière que la préparation à l'intérieur de la cuve soit chauffée jusqu'à la température de transformation prédéfinie, et
autour du dispositif de distribution pour maintenir l'intérieur de la chambre de dosage à la température de dosage.

De manière générale, on peut prévoir que l'appareil comporte un mélangeur agencé dans la cuve pour homogénéiser l'aliment chaud visqueux ou pâteux et une sonde de température agencée à l'intérieur de la cuve pour mesurer la température en cours de transformation de la préparation en aliment chaud visqueux ou pâteux.

De manière générale, on peut avantageusement prévoir que l'appareil est portable et adapté pour une utilisation en extérieur, même dans des conditions hivernales. A titre d'exemple, on peut prévoir que l'appareil est monté sur un support comportant des roulettes pour faciliter son déplacement.

### Brève description des dessins

D'autres caractéristiques et avantages de la présente invention apparaîtront plus clairement à la lecture de la description détaillée de modes de réalisation préférés qui suit, faite en référence aux dessins annexés, donnés à titre d'exemples non limitatifs et, dans lesquels:
- la figure 1 représente une vue en perspective simplifiée et en transparence partielle d'un appareil selon un premier mode de réalisation préféré de l'invention, dans une première configuration;
- la figure 2 représente une vue en perspective simplifiée et en transparence de l'appareil de la figure 1, dans une deuxième configuration;
- la figure 3 représente une vue en perspective éclatée et simplifiée de certains composants d'un appareil selon un deuxième mode de réalisation préféré de l'invention;
- la figure 4 représente une vue en coupe simplifiée de l'appareil de la figure 3;
- les figures 5a et 5b représentent une même vue en perspective d'un détail de construction de l'appareil de la figure 3, dans deux configurations différentes, et
- la figure 6 représente une vue schématique d'un autre détail de construction de l'appareil de la figure 3.

### Mode(s) de réalisation de l'invention

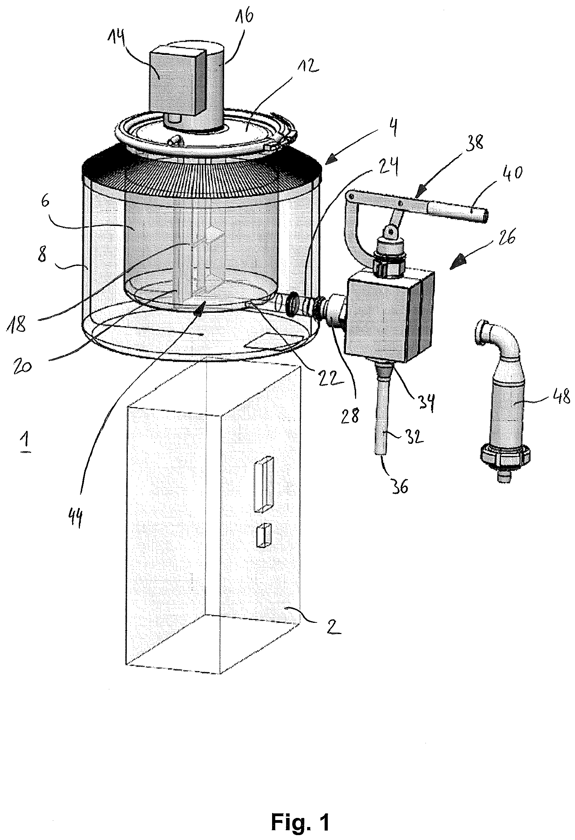

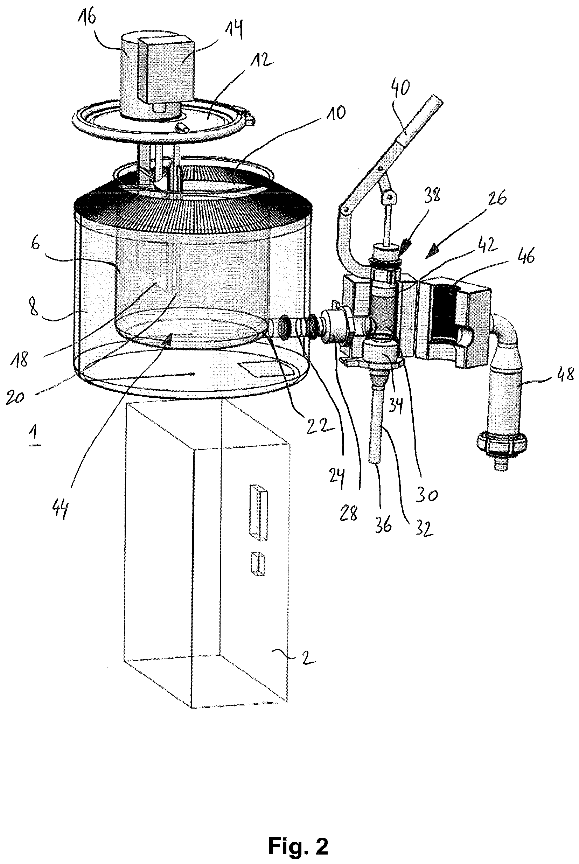

Les figures 1 et 2 représentent des vues en perspective simplifiées et en transparence partielle d'un même appareil 1 de préparation et de distribution d'un aliment chaud visqueux ou pâteux, selon un premier mode de réalisation préféré, suivant deux angles de vue différents et dans deux configurations différentes. Un examen comparé des figures 1 et 2 permet de constater que certains éléments mobiles de l'appareil 1 ont changé de position en passant d'une configuration à l'autre, dans le but d'illustrer plus clairement la construction de l'appareil 1.

On notera que, de manière générale, tous les composants de l'appareil 1 ne sont pas illustrés dans un souci de clarté et de simplification. Toutefois, tous les composants nécessaires à la compréhension de l'appareil selon la présente invention sont visibles.

Les figures illustrent plus précisément un appareil 1, ou fondoir, de préparation et de distribution de fondue au fromage, sous forme de doses individuelles, selon un mode de réalisation préféré non limitatif de l'invention.

Un support 2 a été représenté de manière schématique, celui-ci étant destiné à supporter l'appareil 1 sur son lieu d'implantation, de manière optionnelle. En alternative, l'appareil 1 peut être simplement posé sur une table ou sur tout autre support adapté. Dans le cas de l'utilisation d'un support 2 spécifique, celui-ci peut présenter des fonctionnalités complémentaires qui seront exposées plus loin.

L'appareil 1 comporte une cuve 4, sensiblement cylindrique ici et préférablement du type à double paroi pour en améliorer l'isolation thermique. Ainsi, la cuve 4 comprend deux parois, ici sensiblement coaxiales, dont une première 6, interne, définit un volume utile de la cuve 4, et la seconde 8, externe, améliore l'isolation thermique de la cuve 4.

La cuve 4 comporte une première ouverture 10, dans sa partie supérieure, pour permettre l'introduction d'une préparation destinée à être transformée pour préparer un aliment chaud visqueux ou pâteux, ici notamment des copeaux de fromage et du vin pour préparer une fondue au fromage.

Un couvercle 12 est prévu pour fermer l'ouverture 10, celui-ci étant illustré dans une position retirée, sur la figure 2, dans laquelle il libère l'ouverture 10.

Le couvercle 12 supporte un ensemble de composants destinés à provoquer des remous dans le mélange contenu dans la cuve 4 pour assurer l'homogénéisation de la fondue au fromage finalement préparée.

Plus précisément, ces composants comprennent un moteur 14 couplé à un réducteur 16, supportés par le couvercle 12 à l'extérieur de la cuve 4, le réducteur 16 assurant l'entraînement d'un mélangeur 18 destiné à être plongé dans la cuve 4.

A titre illustratif non limitatif, le mélangeur 18 présente ici la forme d'un double rectangle, c'est-à-dire deux rectangles accolés par l'un de leurs grands côtés, et dont chacun présente une palette transversale inclinée sensiblement à mi-hauteur.

Par ailleurs, le couvercle 12 porte également une sonde de température 20 destinée à être plongée à l'intérieur de la cuve 4 pour mesurer la température en cours de transformation de la préparation en aliment chaud visqueux ou pâteux. On peut avantageusement prévoir que la sonde de température 20 présente une forme telle qu'elle puisse introduire des turbulences dans l'écoulement du mélange dans la cuve en complément à l'action du mélangeur 18. Ainsi, la sonde de température 20 présente ici une surface plane s'étendant suivant un plan sensiblement radial.

La cuve 4 comporte une deuxième ouverture 22, dans sa partie inférieure, destinée à permettre la distribution de l'aliment visqueux ou pâteux issu de la transformation de la préparation initialement introduite dans la cuve 4, ici de la fondue au fromage.

La deuxième ouverture 22 est ménagée dans la première paroi 6 de la cuve 4 et communique avec un conduit de transfert 24 destiné à permettre le transfert de l'aliment visqueux ou pâteux jusqu'à un dispositif de distribution 26.

Tel que cela ressort plus clairement de la configuration illustrée sur la figure 2, le dispositif de distribution 26 comporte un premier clapet 28 en entrée, communiquant avec une chambre de dosage 30, cette dernière communiquant avec un tube de sortie 32 par l'intermédiaire d'un deuxième clapet 34 de sortie. Le tube de sortie 32 présente un orifice de sortie 36 destiné à délivrer l'aliment visqueux ou pâteux dans un récipient.

Par ailleurs, le dispositif de distribution comporte une pompe 38 destinée à travailler en relation avec la chambre de dosage 30.

La pompe 38 illustrée sur les figures 1 et 2 est de type manuel, à titre illustratif non limitatif, et l'homme du métier ne rencontrera pas de difficulté particulière pour mettre en oeuvre une pompe de tout autre type adapté (électrique, manuel...) sans sortir du cadre de la présente invention.

Plus précisément, la pompe 38 comporte un levier 40 relié cinématiquement à un piston 42 logé dans la chambre de dosage 30. Lorsque le levier 40 est éloigné de la chambre de dosage 30, depuis sa position illustrée sur la figure 1 vers sa position tirée illustrée sur la figure 2, le piston 42 monte dans la chambre de dosage 30, créant ainsi une dépression. Les clapets 28 et 34 sont agencés de telle manière que le clapet de sortie 34 reste fermé lorsqu'une dépression est générée dans la chambre de dosage 30, tandis que le clapet d'entrée 28 s'ouvre. Dans cette opération, de la fondue au fromage est alors transférée depuis la cuve 4 et le conduit de transfert 24 jusque dans la chambre de dosage 30, de manière à remplir cette dernière.

Partant de cette configuration, lorsque le levier 40 est pressé en direction de la chambre de dosage 30, faisant ainsi descendre le piston 42, une surpression est générée dans la chambre de dosage 30, provoquant l'ouverture du clapet de sortie 34 (le clapet d'entrée 28 restant fermé dans ce cas) et l'éjection de la dose de fondue au fromage depuis la chambre de dosage 30 vers le tube de sortie 32, pour distribuer la fondue au fromage par l'orifice de sortie 36.

On comprend de ce qui précède que la pompe 38 et son levier 40 jouent ici un rôle d'organe de commande sélectif permettant de contrôler les états respectifs des deux clapets 28 et 34. Soit les deux clapets 28 et 34 sont fermés, par défaut, soit le levier est actionné par un utilisateur pour mettre en oeuvre un cycle de distribution et la pompe 38 crée, dans une première phase, la dépression qui fait passer le premier clapet 28 dans son état ouvert, le clapet 34 restant dans son état fermé, puis la surpression appliquée par la pompe 38 fait repasser le premier clapet 28 dans son état fermé tandis que le deuxième clapet 34 est ouvert pour distribuer la fondue, avant de se refermer une fois que la chambre de dosage 30 est vide. Ainsi, par défaut, la chambre de dosage 30 est vide et isolée à la fois de la deuxième ouverture 22 de la cuve 4 et de l'orifice de sortie 36, donc de l'environnement extérieur.

L'appareil de préparation et de distribution selon la présente invention comporte en outre un dispositif de chauffage comprenant notamment un premier élément chauffant 44 présentant la forme d'une ceinture chauffante, agencée sensiblement tout autour de la première paroi 6 de la cuve 4, afin de chauffer l'intérieur de la cuve 4 jusqu'à une température de transformation prédéfinie (en fonction de la préparation et de l'aliment visqueux ou pâteux dans lequel la préparation doit être transformée), préférablement de la manière la plus homogène possible.

A titre d'exemple, la société Vulcanic commercialise des éléments chauffants susceptibles de convenir pour ce type d'application (http://www.vulcanic.com/fr/chauffe-futs/).

Bien entendu, l'homme du métier ne rencontrera pas de difficulté particulière pour mettre en oeuvre d'autres types d'éléments chauffants, notamment en fonction de ses propres besoins, sans sortir du cadre de la présente invention. Un chauffage de la cuve par bain-marie est par exemple envisageable.

Le dispositif de chauffage comprend un deuxième élément chauffant 46 agencé autour de la chambre de dosage 30 pour maintenir l'intérieur de cette dernière à une température de dosage, qui pourra être située dans une plage en températures sensiblement comprise entre la température de transformation et une température seuil inférieure à cette dernière d'environ 20°C.

Le deuxième élément chauffant 46 peut avantageusement être de nature similaire à celle du premier élément chauffant 44, de manière non limitative.

De manière avantageuse, on peut prévoir que le deuxième élément chauffant soit agencé de telle manière qu'il entoure également le conduit de transfert 24 pour en maintenir l'intérieur à une température de transfert située dans une plage en températures sensiblement comprise entre la température de transformation et une température seuil inférieure à cette dernière d'environ 20°C.

En alternative, il est possible de prévoir que le dispositif de chauffage comprenne un troisième élément chauffant (non représenté) qui serait agencé spécifiquement pour maintenir l'intérieur du conduit de transfert 24 à la température de transfert.

Grâce à ces caractéristiques, il est possible d'assurer un bon contrôle de l'écoulement de l'aliment visqueux ou pâteux entre la cuve 4 et l'orifice de sortie 36 et, donc, un bon dosage de l'aliment, quelles que soient les conditions environnementales auxquelles l'appareil est exposé. En particulier, comme signalé plus haut, les caractéristiques avantageuses de l'appareil selon l'invention permettent par exemple de servir de la fondue au fromage, sous la forme de doses, que l'appareil soit situé en intérieur ou en extérieur, y compris lorsqu'il est soumis à des conditions hivernales, ce qui n'est pas envisageable avec les appareils de l'art antérieur.

L'appareil selon l'invention peut ainsi être par exemple couplé à un distributeur de morceaux de pain chaud préparés à la façon de pains à hotdogs, et destinés à être utilisés directement comme récipients pour les doses de fondue au fromage distribuées par l'appareil.

Les figures représentent également un dispositif de filtration 48 susceptible d'être assemblé au conduit de transfert 24 à la place du dispositif de distribution 26, à des fins de nettoyage, pour filtrer les particules solides qui pourraient être restées dans la cuve en fin d'utilisation.

Il est également envisageable d'ajouter un robinet ou une vanne entre la cuve 4 et le dispositif de distribution 26 pour pouvoir retirer ce dernier alors que la cuve 4 est encore pleine, sans sortir du cadre de l'invention.

En ce qui concerne le support 2, optionnel, il peut présenter différentes fonctionnalités. Il peut notamment loger toute la partie électrique permettant de faire fonctionner l'appareil et éventuellement comprendre des prises électriques additionnelles pour brancher des accessoires supplémentaires, comme par exemple le distributeur de pain chaud. Le support 2 pourrait avantageusement être muni de roues ou roulettes pour pouvoir être déplacé facilement, comme par exemple pour pouvoir être déplacé depuis l'intérieur d'un restaurant jusqu'à une terrasse.

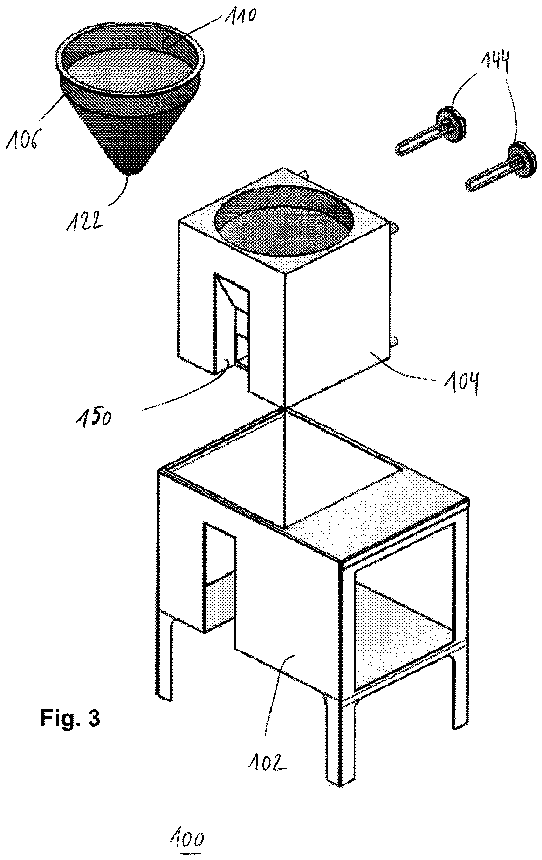

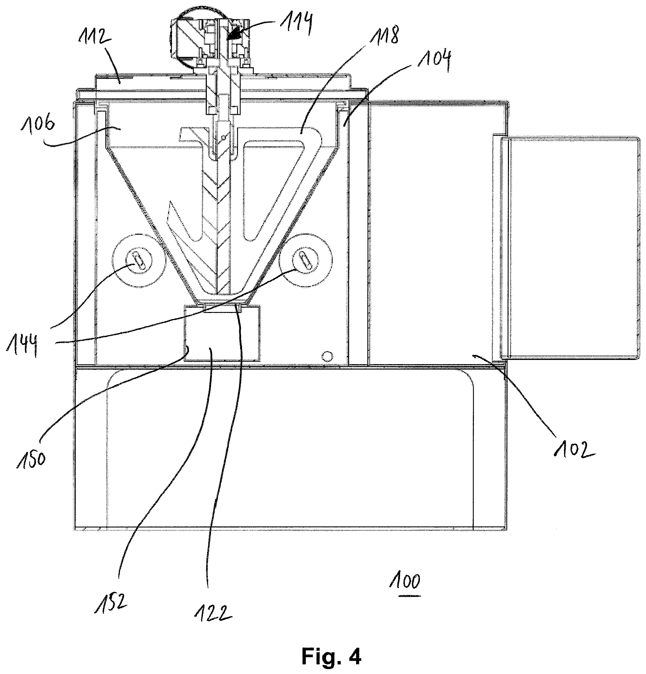

Les figures 3 et 4 représentent, de manière simplifiée, des vues en perspective éclatée et en coupe d'un appareil 100 selon un deuxième mode de réalisation de la présente invention.

Toutes les caractéristiques de construction de l'appareil 100 ne seront pas abordées en détail puisque le principe de base du fonctionnement de cet appareil reste similaire à celui du premier mode de réalisation.

L'appareil 100 comporte un bâti 102 logeant une enceinte chauffante 104 elle-même destinée à loger une cuve 106 de préparation de la fondue de forme générale conique ici, à titre illustratif non limitatif. On a représenté deux résistances 144, à titre d'exemple, destinées à chauffer un liquide à l'intérieur de l'enceinte chauffante 104 pour créer un bain-marie tout autour de la cuve 106.

Il apparaît de la figure 4 que la cuve 106 présente une première ouverture 110, dans sa partie supérieure en position de service, qui peut être fermée par un couvercle 112 portant un moteur 114 entrainant un mélangeur 118 en rotation dans la cuve 106, tout comme dans le premier mode de réalisation. Un réducteur peut également être prévu ainsi qu'une sonde de température (non visibles).

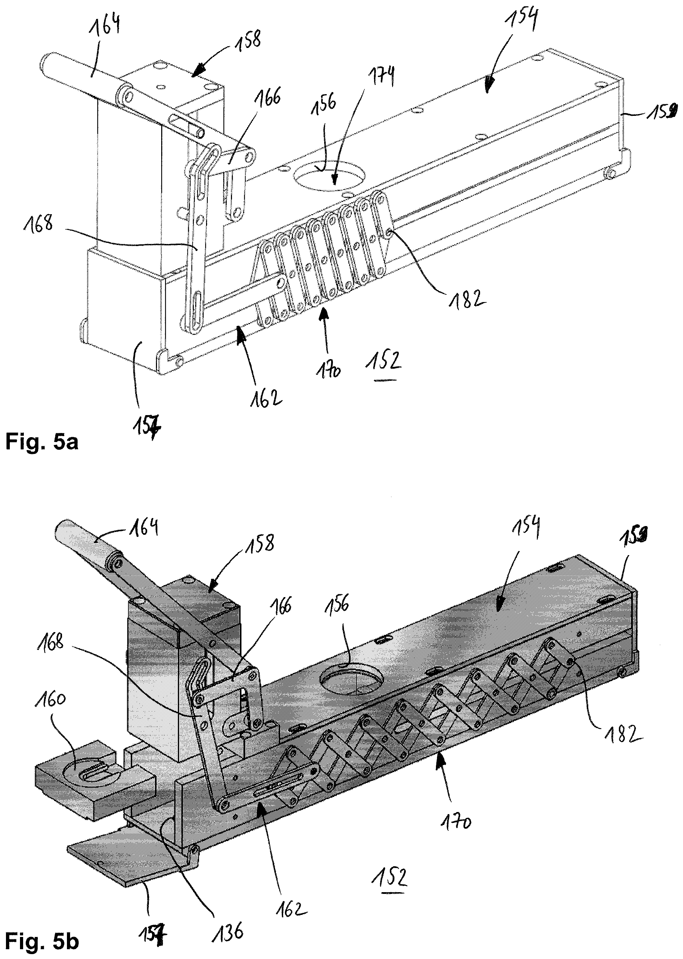

Par ailleurs, l'enceinte chauffante 104 présente une ouverture latérale 150 s'étendant sensiblement sur toute sa longueur et destinée à loger un tiroir amovible 152 illustré sur les figures 5a et 5b. Ainsi, il ressort des figures 3 et 4 que le tiroir amovible 152 bénéficie avantageusement de la température du bain-marie mis en place dans l'enceinte chauffante 104.

Le tiroir amovible 152 comporte une portion principale allongée 154 destinée à être engagée dans l'ouverture 150 en position de service. Chacune de ses extrémités est ici fermée par un volet 157, 159 pivotant pour faciliter l'accès à l'intérieur du tiroir.

La face supérieure de la portion 154 est pourvue d'une ouverture circulaire définissant une entrée 156 agencée pour être située en regard de la deuxième ouverture 122 de la cuve 106, en position de service du tiroir 152, tel que visible sur la figure 4.

De manière similaire, la face inférieure de la portion 154 est pourvue d'un orifice de distribution 136 (seulement partiellement visible sur la figure 5b).

Le tiroir 152 comprend en outre une portion secondaire 158, perpendiculaire à la portion principale 154 et, logeant un piston dont seul l'embout démontable 160 est visible sur la figure 5b, en position démontée.

Le tiroir 152 porte également un mécanisme de commande 162 comprenant une manette 164 agissant par l'intermédiaire de leviers 166, 168 sur un dispositif de multiplication 170 porté par la portion principale 154 du tiroir, et dont la fonction va être exposée ci-dessous. La manette 164 est en outre agencée pour agir sur le piston logé dans la portion secondaire 158 pour le faire descendre en direction de l'orifice de distribution 136.

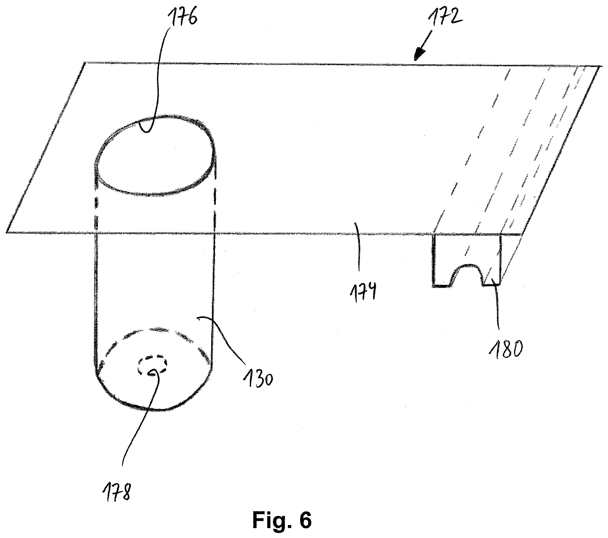

La figure 6 représente une vue schématique d'une chambre de dosage 130 destinée à être logée dans le tiroir amovible 152, grâce à un support 172.

Le support 172 comporte une plaque 174 de forme générale parallélépipédique, de largeur légèrement inférieure à la largeur de la portion 154 du tiroir 152. La plaque 174 est pourvue d'un trou 176 définissant un premier trou, d'entrée, pour la chambre de dosage 130 qui comporte un deuxième trou 178, de sortie, sur sa face opposée à l'entrée 176.

Par ailleurs, le support 172 comporte un organe de liaison 180 permettant de le rendre solidaire d'un axe 182 porté par le dispositif de multiplication agencé en travers de la portion 154 du tiroir 152.

La figure 5a illustre le tiroir 152 dans un premier état, au repos, c'est-à-dire en l'absence d'action d'un utilisateur.

Dans cet état, le premier trou 176 de la chambre de dosage 130 est positionné entre l'entrée 156 du tiroir 152 et son orifice de distribution 136. Ainsi, la chambre de dosage 130, vide, est isolée à la fois de la cuve 106 et de l'orifice de distribution 136, donc de l'environnement extérieur. On rappelle que lorsque le tiroir 152 est en position de service, l'intérieur de la chambre de dosage 130 est maintenue à une température de dosage prédéfinie (ajustable) au moyen du bain-marie mis en place dans l'enceinte chauffée 104.

En soulevant légèrement la manette 164, comme illustré sur la figure 5b, l'axe 182 du mécanisme de commande subit un déplacement qui est ici de l'ordre de dix fois le déplacement de la manette 164 (pris au niveau de l'axe du piston) et déplace d'autant la chambre de dosage 130 qui se trouve alors positionnée en regard de l'entrée 156 du tiroir 152, soit en regard de la deuxième ouverture 122 de la cuve 106, dans un état de remplissage ou dosage. La fondue peut alors s'écouler librement depuis la cuve 106 jusque dans la chambre de dosage 130. Le dispositif de distribution se trouve ainsi dans un deuxième état, de dosage.

Une fois la chambre de dosage 130 remplie, la manette 164 peut être abaissée avec une course sensiblement égale au double de la première course, lors de la montée, pour ramener la chambre de dosage 130 vers la gauche sur la figure 5b, de telle manière que son deuxième trou 178 soit positionné en regard de l'orifice de distribution 136, dans un troisième état du dispositif de distribution, à savoir un état de distribution.

A cet instant, un abaissement supplémentaire de la manette 164 entraine une descente du piston dans la chambre de dosage 130 pour en expulser la fondue au travers du deuxième trou 178 puis de l'orifice de distribution 136.

La manette 164 peut ensuite reprendre sa place pour repositionner la chambre de dosage 130 entre l'entrée 156 du tiroir 152 et sa sortie 136 pour qu'elle soit à nouveau isolée en étant maintenue à bonne température, en attendant la distribution suivante.

On note que la plaque 174 assure la fermeture de l'entrée 156 lorsque le dispositif de distribution n'est pas dans son état de dosage, c'est-à-dire dès lors que la chambre de dosage 130 n'est pas positionnée en regard de la deuxième ouverture 122.

Grâce aux caractéristiques de la présente invention, on obtient un appareil de préparation et de distribution d'un aliment chaud visqueux ou pâteux, à la demande, y compris dans une atmosphère qui ne serait pas contrôlée en température. L'aliment est maintenu à une température optimale et sous une forme homogène jusqu'au dernier moment, lorsqu'il est distribué.

La description qui précède s'attache à décrire un mode de réalisation particulier à titre d'illustration non limitative et, l'invention n'est pas limitée à la mise en oeuvre de certaines caractéristiques particulières qui viennent d'être décrites, comme par exemple la nature ou le nombre des éléments du dispositif de chauffage, l'assemblage du couvercle en relation avec le moteur, le mélangeur et la sonde de température. En particulier, l'appareil pourra comporter plusieurs dispositifs de chauffage indépendants les uns des autres sans sortir du cadre de l'invention en lieu et place d'un dispositif de chauffage unique comprenant plusieurs éléments de chauffage distincts.

L'homme du métier ne rencontrera pas de difficulté particulière pour adapter le contenu de la présente divulgation à ses propres besoins et, mettre en oeuvre un appareil de préparation et de distribution d'un aliment chaud visqueux ou pâteux ne répondant qu'en partie aux caractéristiques décrites sans sortir du cadre de l'invention.

On notera par exemple que la présente invention n'est pas non plus limitée à la construction du dispositif de distribution telle qu'elle a été décrite. Différentes alternatives pourront être mises en oeuvre sans pour autant sortir du cadre de l'invention. Ainsi, par exemple, la pompe peut être automatisée et la chambre de dosage peut être dimensionnée pour recevoir plusieurs doses en un seul remplissage. L'utilisation d'une pompe automatisée peut notamment permettre l'accouplement de l'appareil avec un automate de paiement. Dans le cas d'un distributeur de fondue au fromage comme mentionné plus haut, on pourrait ainsi envisager qu'un utilisateur paye le montant requis pour que l'appareil libère un morceau de pain et une dose de fromage en réponse à une simple pression sur un bouton de commande. De nombreuses applications alternatives sont envisageables sans sortir du cadre de l'invention.

De manière similaire, il est bien entendu possible d'automatiser le mécanisme de commande du deuxième mode de réalisation sans sortir du cadre de l'invention. En outre, l'invention pourra également être mise en oeuvre sans dispositif de multiplication ou avec un dispositif de multiplication présentant un rapport différent de celui décrit ici, sans pour autant sortir du cadre de l'invention.

De manière générale, l'invention n'est pas limitée aux modes d'action décrits en relation avec les déplacements de la fondue dans ou hors de l'appareil. L'homme du métier pourra se contenter de faire appel à la gravité ou prévoir la mise en oeuvre de pompes ou de pistons en fonction de ses propres besoins sans sortir du cadre de l'invention. De même, les cinématiques décrites en relation avec les organes de commande ne sont pas non plus limitatives. Bien entendu, il est évident que l'action prédéfinie de l'utilisateur ne sera pas la même pour actionner un appareil à commande manuelle et pour actionner un appareil dont le fonctionnement est automatisé. Aussi, l'homme du métier pourra également adapter le présent enseignement en fonction de ses besoins pour mettre en oeuvre ces caractéristiques sans pour autant sortir du cadre de l'invention.

De manière générale, l'homme du métier ne rencontrera pas de difficulté particulière pour adapter les moyens de chauffage de l'appareil en fonction de ses propres besoins, notamment pour ce qui concerne leur fonctionnement ou leur réglage. Il pourra par exemple prévoir de disposer des sondes de température dans les endroits sensibles de l'appareil, comme par exemple la chambre de dosage. Il est possible pour le fabricant de faire un étalonnage de l'appareil lorsque celui-ci comporte un thermostat par exemple, sans sortir du cadre de l'invention.

## Revendications

1. Appareil (1; 100) de préparation et de distribution d'un aliment chaud, visqueux ou pâteux, comportant
- une cuve (4; 106) comprenant, en position de service,
une première ouverture (10; 110), dans sa partie supérieure, agencée pour permettre l'introduction d'une préparation destinée à être transformée en aliment chaud visqueux ou pâteux,
une deuxième ouverture (22; 122), dans sa partie inférieure, destinée à permettre la distribution dudit aliment chaud visqueux ou pâteux,
- un dispositif de chauffage, destiné à chauffer la préparation à l'intérieur de ladite cuve (4; 106) jusqu'à une température de transformation prédéfinie, adaptée pour transformer la préparation en aliment chaud visqueux ou pâteux,
- un dispositif de distribution (26) agencé en aval de ladite deuxième ouverture (22; 122) et présentant un orifice de distribution (36; 136) pour distribuer ledit aliment chaud visqueux ou pâteux, ledit dispositif de chauffage étant également agencé pour maintenir au moins une partie dudit dispositif de distribution (26) à une température de distribution prédéfinie, **caractérisé**
**en ce que** ledit dispositif de distribution (26) comporte
- une chambre de dosage (30; 130) définissant un volume prédéfini d'aliment chaud visqueux ou pâteux à distribuer et agencée de manière à pouvoir communiquer, d'une part, avec ladite deuxième ouverture (22; 122) et, d'autre part, avec ledit orifice de distribution (36; 136), ladite chambre de dosage (30; 130) étant destinée à être vide, dans un premier état de repos dudit dispositif de distribution en étant isolée à la fois de ladite deuxième ouverture (22; 122) et dudit orifice de distribution (36; 136),
- un organe de commande externe (40; 164) agencé pour actionner un cycle de distribution, en réponse à une action prédéfinie d'un utilisateur, et
**en ce que** ledit dispositif de distribution (26) est agencé de telle manière qu'il est susceptible de présenter successivement, en réponse à ladite action prédéfinie,
- un deuxième état, de dosage, dans lequel ladite chambre de dosage (30; 130) communique avec ladite deuxième ouverture (22; 122) tout en étant isolée dudit orifice de distribution (36; 136), puis
- un troisième état, de distribution, dans lequel ladite chambre de dosage (30; 130) communique avec ledit orifice de distribution (36; 136) tout en étant isolée de ladite deuxième ouverture (22; 122).

2. Appareil (1) selon la revendication 1, **caractérisé en ce que** ledit dispositif de distribution comporte
un premier clapet (28), agencé entre ladite deuxième ouverture (22) et ladite chambre de dosage (30), susceptible de présenter un premier état par défaut, fermé, dans lequel il isole ladite chambre de dosage (30) de ladite cuve (4) et un deuxième état, ouvert, dans lequel ladite cuve (4) et ladite chambre de dosage (30) communiquent l'une avec l'autre,
un deuxième clapet (34), agencé entre ladite chambre de dosage (30) et ledit orifice de distribution (36), susceptible de présenter un premier état par défaut, fermé, dans lequel il isole ladite chambre de dosage (30) dudit orifice de distribution (36) et un deuxième état, ouvert, dans lequel ladite chambre de dosage (30) communique avec ledit orifice de distribution (36), et
un organe de commande sélectif (38, 40) des états desdits premier et deuxième clapets (28, 34) agencé pour agir sur eux de telle manière qu'un seul d'entre eux est ouvert à la fois lors de la mise en oeuvre dudit cycle de distribution.

3. Appareil (1) selon la revendication 2, **caractérisé en ce que** ledit dispositif de distribution (26) comporte une pompe (38) destinée à être actionnée en réponse à ladite action prédéfinie de l'utilisateur, d'une part, pour remplir ladite chambre de dosage (30) en aliment chaud visqueux ou pâteux au travers dudit premier clapet (28) et, d'autre part, pour repousser ledit aliment chaud visqueux ou pâteux en direction dudit orifice de distribution (36), au travers dudit deuxième clapet (34).

4. Appareil (100) selon la revendication 1, **caractérisé en ce que** ledit dispositif de distribution comporte un mécanisme de commande (162) agencé de telle manière, qu'en réponse à ladite action prédéfinie, il agit sur ladite chambre de dosage (130) pour la positionner successivement
dans une première configuration prédéfinie, dans laquelle elle présente un premier trou (176) en regard de ladite deuxième ouverture (122) de la cuve (106), pour permettre son remplissage, puis
dans une deuxième configuration prédéfinie, dans laquelle elle présente un deuxième trou (178) en regard dudit orifice de distribution (136), pour permettre la distribution de l'aliment chaud visqueux ou pâteux au travers dudit orifice de distribution (136).

5. Appareil (100) selon la revendication 4, **caractérisé en ce que** ledit dispositif de distribution comporte un tiroir amovible (152) dans lequel est ménagé ledit orifice de distribution (136) et définissant un logement dans lequel ladite chambre de dosage (130) est susceptible d'être déplacée en translation, en réponse à ladite action prédéfinie, ledit tiroir (152) présentant une entrée (156) agencée en regard de ladite deuxième ouverture (122) de ladite cuve (106) en position de service.

6. Appareil (100) selon la revendication 4 ou 5, **caractérisé en ce que** ledit tiroir (152) porte ledit mécanisme de commande (162), ce dernier comportant un piston (160) agencé pour s'engager dans ladite chambre de dosage (130) par son premier trou (176) et repousser l'aliment chaud visqueux ou pâteux qu'elle contient pour l'expulser au travers dudit deuxième trou (178), en direction dudit orifice de distribution (136), lorsque ladite chambre de dosage (130) est dans sa deuxième configuration prédéfinie.

7. Appareil (1; 100) selon l'une des revendications précédentes, **caractérisé en ce que** ladite température de distribution est située dans une plage en températures sensiblement comprise entre ladite température de transformation et une température seuil inférieure à cette dernière d'environ 20°C.

8. Appareil (1; 100) selon l'une des revendications précédentes, **caractérisé en ce que** ledit dispositif de chauffage est agencé pour maintenir l'intérieur de ladite chambre de dosage (30; 130) à une température de dosage sensiblement égale à ladite température de distribution.

9. Appareil (1) selon la revendication 8, **caractérisé en ce que** ledit dispositif de chauffage comporte
un premier élément chauffant (44) agencé pour chauffer la préparation à l'intérieur de ladite cuve (4) jusqu'à ladite température de transformation, et
un deuxième élément chauffant (46) agencé pour maintenir l'intérieur de ladite chambre de dosage (30) à ladite température de dosage.

10. Appareil (100) selon la revendication 8, **caractérisé en ce qu'**il comporte un bâti (102) et **en ce que** ledit dispositif de chauffage comporte une enceinte chauffée (104) agencée à l'intérieur dudit bâti (102) à la fois
autour de ladite cuve (106), de telle manière que la préparation à l'intérieur de ladite cuve (106) soit chauffée jusqu'à ladite température de transformation prédéfinie, et
autour dudit dispositif de distribution pour maintenir l'intérieur de ladite chambre de dosage (130) à ladite température de dosage.

11. Appareil (100) selon les revendications 5 et 10, **caractérisé en ce que** ladite enceinte chauffée (104) est agencée autour dudit tiroir amovible (152) lorsqu'il est en position de service.

12. Appareil (1; 100) selon l'une des revendications précédentes, **caractérisé en ce qu'**il comporte un mélangeur (18; 118) agencé dans ladite cuve (4; 106) pour homogénéiser ledit aliment chaud visqueux ou pâteux.

13. Appareil (1; 100) selon l'une des revendications précédentes, **caractérisé en ce qu'**il comporte une sonde de température (20) agencée à l'intérieur de ladite cuve (4; 106) pour mesurer la température en cours de transformation de la préparation en aliment chaud visqueux ou pâteux.

14. Appareil (1; 100) selon l'une des revendications précédentes, **caractérisé en ce qu'**il est portable et adapté pour une utilisation en extérieur dans des conditions hivernales.
